# EUROPEAN PATENT APPLICATION

(11) **EP 1 367 270 A1**
(43) Date of publication of application: **03.12.2003**
(21) Application number: 03253145.1
(22) Date of filing: 20.05.2003
(51) Int. Cl.: F16B 35/04, F16B 35/06, F16B 25/10

(54) **Self-drilling screw**

(30) Priority: 30.05.2002 JP 2002156648
(71) Applicant: YUGENKAISHA SHINJO SEISAKUSHO, Nishinari-ku, Osaka (JP)
(72) Inventor: Shinjo, Katsumi, c/o Yugenkaisha Shinjo Seisakusho, Nishinari-ku, Osaka (JP)
(74) Representative: Turner, James Arthur

(57) **Abstract**

A self-drilling screw (20) for use in steel houses has: a leg (11) with opposite end regions and having a screw thread (18) formed by the rolling method, one of the leg end regions being formed as a drilling portion (17), the other end region continuing to a flathead (12) through a neck (13) disposed close to the flathead. A recess (14) formed in the flathead (12) can engage a wrenching bit of a screw driver, and the recess has torque-receiving vanes (15) extending generally in parallel with an axis of the screw. The neck (13) is a thickened portion of the leg (11) to have a diameter larger than a diameter of valleys of the thread (18) and smaller than its outer diameter. The neck (13) extends between the top of flathead (12) and the inner ends (15a) of vanes (15), with the recess (14) having a conical bottom (16) disposed in the leg, so that the thinned head of self-drilling screw withstands a strong torque for tightening it and also protects the driver bit from "caming-out".

## Description

The present invention relates to self-drilling screws. Embodiments of the invention relate to self-drilling screws for use in steel houses.

Raw steel beams may be combined with each other to form such a steel frame, generally using the so-called self-drilling screws. The shapes and dimensions of self-drilling screws are prescribed in the "KC Standards" (viz., standards established by the Japanese Official Society "Kozai Club") in Japan.

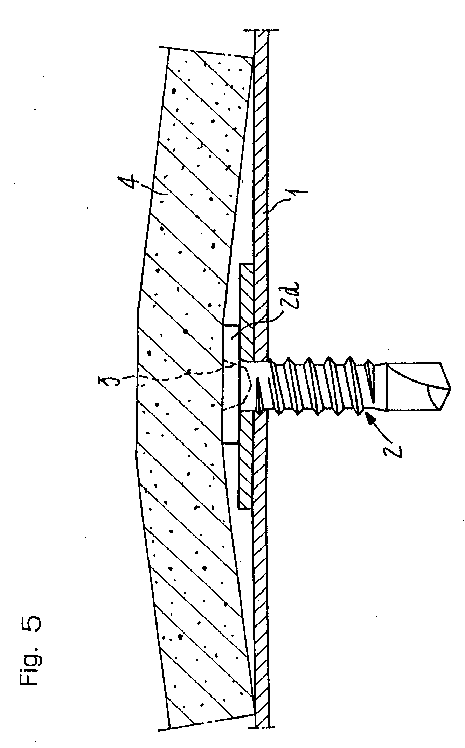

Exemplified in Fig. 5 is a steel frame 1 constructed using a flathead bolt 2 qualifying as a screw defined in the KC Standards. A plasterboard 4 as a material for finishing the interior of a house may be attached to this frame 1. A portion of this plasterboard will contact the head 2a of such a bolt 2, and this head is prone to produce a protuberance in the surface of plasterboard 4, thereby impairing appearance of the finished interior. In view of such an inconvenience, the KC Standards prescribe a self-drilling screw to have a flathead 2a as shown in the drawings. If this bolt 2 has a nominal diameter of 4.8 *mm,* then the thickness of its head has to fall within a range of 1.8 *mm* to 2.2 *mm.*

On the other hand, the item B 1122 in the Japanese Industrial Standards (viz., "JIS") relates to a usual self-tapping screw with a head having formed therein a cruciform recess. If its head is 2.15 - 2.4 *mm* thick, then nominal diameter for its threaded leg is 2.9 *mm.* In contrast, the bolt has such a thin flathead (1.8 - 2.2 *mm* thick) by the KC Standards, and nevertheless has to drive its thick threaded leg of a diameter of 4.8 *mm.* Such a nominal leg diameter 4.8 *mm* is much greater than 2.9 *mm* by the JIS, as compared with its head so thin as equal to or much smaller than 2.15- 2.4 *mm* (for the JIS's ordinary self-tapping screws each with a cruciform recessed head).

Correspondingly, a recess 3 formed in such a thin head 2a for engagement with a driver bit must be so shallow that the bit will be worn out or damaged soon, failing to tightly fasten the screw. If a motor-driven highspeed wrench or the like rotating at a high speed of 2500 *rpm* or more is used, then a very troublesome "caming-out" of its driver bit will probably happen.

Further embodiments of the invention more particularly relate to self-drilling screws used to construct a steel frame employing C-beams, wherein these C-beams are zinc-plated steel plate articles having a relatively small thickness of about 1 *mm* and used in the so-called "two-by-four" system construction of houses.

Various respective aspects and features of the invention are defined in the appended claims. Features from the dependent claims may be combined with features of the independent claims as appropriate and not merely as explicitly set out in the claims.

Embodiments of the present invention seek to resolve the drawbacks inherent in the prior art. Embodiments of the present invention seek to provide a self drilling screw adapted for use in steel houses, having such a head as withstanding a torque strong enough for it to reliably tighten the screw, and also protecting a driver bit from "caming-out " trouble, even if the head is made thinner than the conventional thickness as prescribed in the KC Standards.

In order to achieve this, embodiments of the present invention will provide a self-drilling screw whose leg with opposite end regions has a screw thread formed by the rolling method, one of the end regions being formed as a drilling portion, with the other end region continuing to a flathead through a neck disposed close to the flathead. A recess formed in the flathead for engagement with a wrenching bit of a screw driver has torque-receiving vanes that extend generally in parallel with an axis of the threaded leg. It is a characteristic structural feature that the neck is formed as a thickened portion of the leg so as to have a diameter larger than a diameter of valleys each present between adjacent crests of thread and smaller than an outer diameter thereof. It is a further characteristic structural feature that the thickened neck extends between a top of the flathead and inner ends of the torque-receiving vanes, with the recess having formed therein a conical bottom that is disposed in the leg's top region continuing to the thickened neck.

The flathead may have a thickness of about 1.0 *mm.*

The invention will now be described by way of example with reference to the accompanying drawings, throughout which like parts are referred to by like references, and in which:
Fig. 1 is a front elevation of a self-drilling screw provided in an embodiment of the present invention for use to construct steel houses;
Fig. 2 is a plan view of a head of the screw shown in Fig. 1;

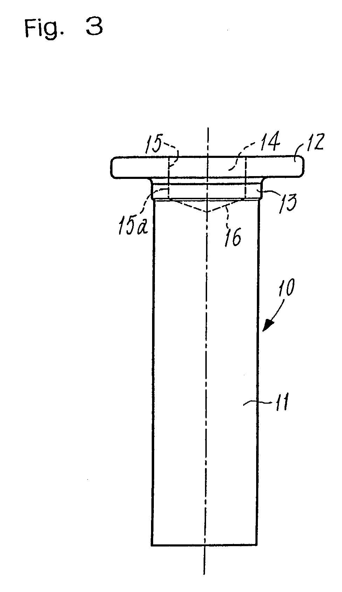

Fig. 3 is a front elevation of a raw rod, viz., a screw blank, going to be processed to give the finished self-drilling screw provided by embodiments of the invention;
Fig. 4 is a front elevation of the self-drilling screw shown in use; and
Fig. 5 is a front elevation of the prior art flathead self-drilling screw used in a steel house frame and shown partly in cross section.

Now some embodiments of the present invention will be described in detail, referring to the drawings.

A screw blank 10 comprises a raw leg 11 that has to be rolled to form thereon a screw thread 18. One of opposite ends of the raw leg 11 continue to a thin flathead 12, through a neck disposed adjacent to this head 12. This neck is formed as a thickened portion 13 whose diameter is larger than the raw leg 11, but smaller than the outer diameter of the screw thread 18. On the other hand, a recess 14 for engagement with a rotary driver will be dug in the flathead 12. Preferably, this recess 14 may be of a special and highly sophisticated shape in cross section, as if two equilateral triangles were superimposed with an angular shift of 60 degrees, wherein all the apices are rounded to be arcs as proposed by the present applicant in the Japan Patent Publication No. 7-37805. Thus, the recess 14 has six torque-receiving vanes 15 that extend generally in parallel with an axis of screw (so that peripheral portions of a driver bit will come into a surface contact with each vane, enabling transmission of a strong torque). Such a configuration of the recess in flathead is effective to diminish the possibility of an undesired 'caming-out' of the driver bit from said recess 14, in spite of the strong torque imparted thereto. Further, the thickened portion 13 formed as a neck continuing to this flathead 12 will enhance its mechanical strength, whilst reducing its thickness to about 1.0 *mm.*

Alternatively, the recess may be a square hole of the IFI Standards, a "Torx hole" of the item No. 116-89 in the JASOF Standards, or any one else, each having longitudinal vanes efficiently receiving a strong torque.

The thickened neck 13 is of a length corresponding to the substantial depth of the recess 14, thus reaching the inner ends 15a of torque-receiving vanes 15. Consequently, the thickened neck 13 extending down from the flathead a distance to reach the inner end of recess 14, so that this recess has a conical bottom 16 formed therein and disposed in the leg's 11 top region continuing to the thickened neck 13.

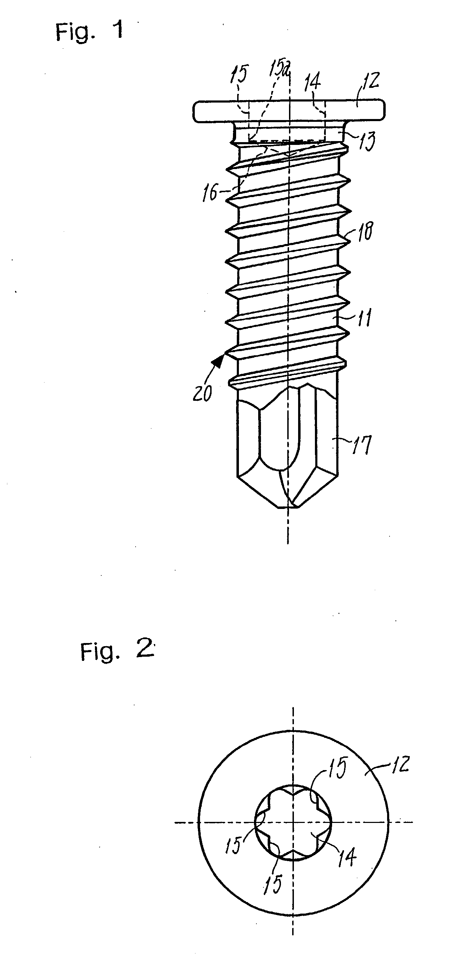

As seen in Fig. 1, distal end portion of the leg 11 of screw blank 10 of the configuration described above will be pressed to give a drilling bit 17, before said leg is rolled to produce on its periphery the screw thread 18 so as to finish the flathead self-drilling screw 20. This screw thread 18 extends to a basal or upper end of leg 11, but terminates short of the thickened neck 13. There is no possibility that the thread rolling process would adversely cause the driver-engaging recess 14 to shrink. Thus, the thickened neck 13 need not be of an excessively large diameter but can be designed to fall within a certain range. This range is defined between a diameter larger than the diameter of leg 11 (viz., diameter of valley portions each present between adjacent crests of thread 18) and another diameter smaller than the outer diameter thereof. If the recess 14 is made shallow as in the illustrated case, then the thickened neck 13 may be rendered short considerably but enough to cover the inner ends 15a of torque-receiving vanes 15.

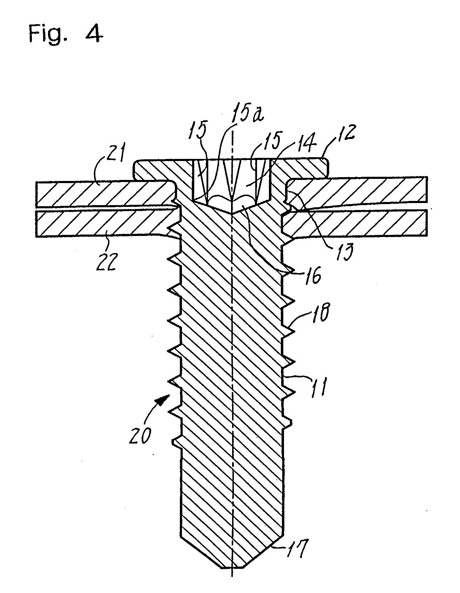

In this case, when the self-drilling screw 20 is used to fasten metal panels 21 and 22 stacked one on another as shown in Fig. 4, the thickened neck 13 can easily be intruded into the upper panel 21. Consequently, only the thin flathead 12 will be exposed to the exterior of said upper panel 21, advantageously to the steel frames for building a steel house.

It will now be apparent that the self-drilling screw provided by embodiments of the invention has beneath its head the thickened neck of such reduced diameter and height as easily intruding it into the panel being fastened, leaving only its flathead exposed to the outside. However, the driver bit-engaging recess formed in the head may be rendered deep enough to penetrate the thickened neck such that transmission of a strong torque would not give rise to the trouble of "caming-out" when this screw is tightened surely and firmly into thin plates constituting a steel frame. Further, the thickened neck of the screw's leg does improve the flathead in its strength to such a degree as reducing its thickness to about 1.0 *mm,* thus protecting plasterboards from swelling out to make ugly protuberances on the steel frame surface.

## Claims

1. A self-drilling screw (20) for use in steel houses comprising:
a leg (11) with opposite end regions and having a screw thread (18) formed by the rolling method,
one of the leg end regions being formed as a drilling portion (17),
the other end region continuing to a flathead (12) through a neck (13) disposed close to the flathead,
a recess (14) formed in the flathead (12) and capable of engaging a wrenching bit of a screw driver, and
the recess having torque-receiving vanes (15) that extend generally in parallel with an axis of the screw (20),
in which the neck (13) is formed as a thickened portion of the leg (11) so as to have a diameter larger than a diameter of valleys each present between adjacent crests of the screw thread (18) and smaller than an outer diameter thereof,
and in which the thickened neck (13) extends between a top of the flathead (12) and inner ends (15a) of the torque-receiving vanes (15), with the recess (14) having formed therein a conical bottom (16) that is disposed in the leg and in a top region thereof continuing to the thickened neck (13).

2. A self-drilling screw as defined in claim 1, in which the flathead (12) has a thickness of about 1.0 *mm.*

3. A self-drilling screw as defined in claim 1 or 2, in which
the recess (14) is selected from the group consisting of a square hole in accordance with the IFI Standards and a hole in accordance with the item No. 116-89 of the JASOF Standards.
